# EUROPÄISCHE PATENTSCHRIFT

(11) **EP 0 576 631 B1**
(45) Veröffentlichungstag und Bekanntmachung des Hinweises auf die Patenterteilung: **15.05.1996**
(21) Anmeldenummer: 92918123.8
(22) Anmeldetag: 25.08.1992
(51) Int. Cl.: F16L 9/14, F16L 21/02, E21B 17/08

(54) **VORTRIEBSROHR ZUM UNTERIRDISCHEN VORTRIEB**
BORE TUBE FOR UNDERGROUND EXCAVATION
TUYAU DE FONCAGE POUR CREUSEMENT SOUTERRAIN

(30) Priorität: 27.09.1991 DE 4132251
(43) Veröffentlichungstag der Anmeldung: 05.01.1994
(73) Patentinhaber: Buderus Guss GmbH, D-35576 Wetzlar (DE)
(72) Erfinder: Schmax, Franz, D-6330 Wetzlar (DE)
(86) Internationale Anmeldenummer: EP9201948
(87) Internationale Veröffentlichungsnummer: WO9306403

(56) Entgegenhaltungen:
- EP-A- 0 247 496
- DE-A- 3 703 580
- DE-A- 3 837 161

## Beschreibung

Die Erfindung betrifft ein Vortriebsrohr nach dem Oberbegriff des Patentanspruches 1.

Ein Vortriebsrohr dieser Art ist der DE-A-38 37 161 zu entnehmen. Das dort dargestellte und beschriebene Rohr besteht aus einem zylindrischen Rohrkörper aus duktilem Gußeisen, bei dem stirnseitig wechselweise am Innen- und Außenumfang Rücksprünge mechanisch ausgearbeitet sind. Diese Rücksprünge sind so gestaltet, daß sie bei benachbarten Rohrkörpern ineinander greifen, um einen durchlaufenden zylindrischen Mantel zu bilden. Da bewußt von Zylinderkörpern ausgegangen wurde, die stirnseitig zu bearbeiten sind, muß eine entsprechend große Wandstärke vorgesehen werden. Im anderen Fall wäre ein mechanisches Ausarbeiten der Rücksprünge nicht möglich.

In der DE-C-36 18 334, und der DE-A-37 03 580 sind Vortriebsrohre in Form eines mit einer Auskleidung versehenen Muffenrohres aus duktilem Gußeisen dargestellt und beschrieben. Da ein solches Rohr eine nach außen über den zylindrischen Schaft vorspringende Muffe besitzt, ist es in diesem Zustand für den Vortrieb nicht geeignet. Deshalb ist es mit einer äußeren Ummantelung aus Beton versehen, um einen zylindrischen Außenmantel zu erzielen. Erst durch einen solchen Verbund ist es möglich, ein herkömmlich bekanntes Muffenrohr als Vortriebsrohr zu verwenden.

Es soll eine Möglichkeit geschaffen werden, ein Vortriebsrohr aus duktilem Gußeisen ohne die Sonderaufwendung einer mechanischen Bearbeitung eines Zylinderkörpers oder einer äußeren Ummantelung eines Muffenrohres zu erstellen.

Das erfindungsgemäße Vortriebsrohr besitzt das im Kennzeichen des Patentanspruches 1 genannte Merkmal.

Es handelt sich nicht um einen Zylinderkörper mit stirnseitig herausgearbeiteten Rücksprüngen und auch nicht um ein herkömmliches Muffenrohr, das erst durch eine Ummantelung zu einem Zylinderkörper gestaltet wird. Das Rohr ist vielmehr als Zylinderkörper mit einseitig innen ausgeformter Muffe und anderseitig eingezogenem Einsteckende gestaltet. Da das Einsteckende eingezogen, d.h. mit einem geringeren Durchmesser versehen ist, kann dieses dann in eine entsprechende Muffe des benachbarten Rohres eingefügt werden.

Das eingezogene Einsteckende stützt sich an einem am Grund der Muffe umlaufenden Anlagebund ab. Somit erfolgt eine Kraftübertragung vom Rohrschaft über den Anlagebund auf das eingezogene Einsteckende des anderen Rohres. Es kann eine hohe Vortriebskraft übertragen werden. Noch höher sind die Übertragungskräfte, wenn sich umgekehrt der etwa rechtwinklige Übergang vom zylindrischen Schaft zum Einsteckende an der Muffenstirnkante des Nachbarrohres abstützt.

Die innen ausgeformte Muffe kann als Tyton-Muffe gestaltet sein. Der anerkannte Dichteffekt dieser Muffenart kann auf diese Weise genutzt werden. Da sie nur innen in dem zylindrischen Rohr ausgeformt ist, ragen keine Partien über den Zylindermantel hinaus. Das Einsteckende auf der Gegenseite ist gerade um soviel eingezogen, daß es in die innere Muffe hineinpaßt. Sofern nun ein rechtwinkliger Übergang vom Zylinderkörper zum eingezogenen Einsteckende geschaffen wird und die Länge des eingezogenen Einsteckendes die axiale Längserstreckung der Muffe nur geringfügig über-/ oder unterschreitet, ergibt sich eine fast übergangslose, äußere Zylinderkontur des Rohrstranges.

Der besondere Vorteil des erfindungsgemäßen Vortriebsrohres liegt darin, daß es die Vorzüge eines bekannten Muffenrohres besitzt und dennoch ohne Sonderaufwand direkt als Vortriebsrohr eingesetzt werden kann. Die Fertigung ist auch im Schleudergußverfahren möglich. Das gilt auch bezüglich des eingezogenen Einsteckendes, was mit einer speziellen, schwenkbaren Rollenbock-Einrichtung geschleudert werden kann.

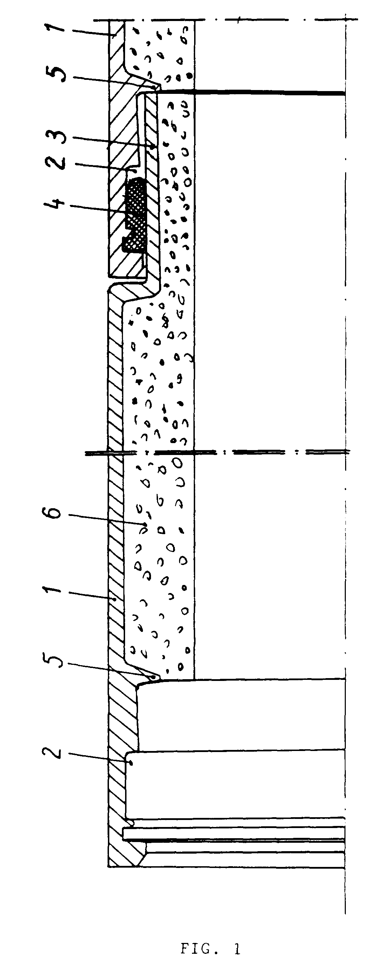

Die beigefügt Zeichnung stellt in einer einzigen Figur einen Teil-Längsschnitt durch ein Vortriebsrohr einschließlich dem Verbindungsbereich dar.

Das Vortriebsrohr besteht aus einem gußeisernen Zylinderkörper 1 mit einseitig innen ausgeformter Muffe 2 und anderseitig eingezogenem Einsteckende 3. Das Einsteckende 3 wird unter Zwischenfügung eines Tyton-Dichtringes 4 in eine entsprechende Muffe 2 eines benachbarten Rohres eingefügt und legt sich dort an einen nach innen vorspringenden Anlagebund 5 an. Die Kraftübertragung erfolgt somit vom Anlagebund 5 über das Einsteckende 3 auf den Zylinderkörper 1. Zwischen der vorderen Stirnfläche im Muffenbereich und dem etwa rechtwinkligen Übergang vom Zylinderkörper 1 zum eingezogenen Einsteckende 3 ist hingegen ein geringfügiger Abstand. Es ist auch möglich, den rechtwinkligen Übergang direkt an die Muffenstirnkante anzulegen, um noch höhere Kräfte zu übertragen. Vom Anlagebund 5 bis zum Ende des Einsteckendes 3 ist das Rohr mit einer Auskleidung 6 versehen.

## Patentansprüche

1. Vortriebsrohr zum unterirdischen Vortrieb aus vertikalen Schächten, bestehend aus einem mit einer inneren Auskleidung versehenen zylindrischen Rohrkörper aus duktilem Gußeisen, der als Muffenrohr mit einseitig in dem Zylinderkörper innen angebrachter Muffe (2) und anderseitig mit redurziertem Durchmesser, in eine entsprechende Muffe (2) eines benachbarten Muffenrohres einzufügendem Einsteckende (3) besteht, dadurch gekennzeichnet, daß die Muffe durch Ausformen und das Einsteckende durch Einziehen gebildet sind.

2. Vortriebsrohr nach Anspruch 1,
dadurch gekennzeichnet, daß am Muffengrund ein umlaufender, nach innen vorspringender Anlagebund (5) für die Abstützung des einzufügenden, eingezogenen Einsteckendes (3) des benachbarten Muffenrohres angeordnet ist.

3. Vortriebsrohr nach den Ansprüchen 1 und 2,
dadurch gekennzeichnet, daß der Übergang vom Zylinderkörper (1) zum eingezogenen Einsteckende (3) etwa rechtwinklig verläuft und daß die Länge des eingezogenen Einsteckendes (3) die Muffentiefe bis zum Anlagebund (5) am Muffengrund geringfügig übersteigt.

4. Vortriebsrohr nach Anspruch 1,
dadurch gekennzeichnet, daß der Übergang vom Zylinderkörper (1) zum eingezogenen Einsteckende (3) etwa rechtwinklig verläuft und daß die Länge des eingezogenen Einsteckendes die Muffentiefe bis zum Muffengrund geringfügig unterschreitet.

## Claims

1. A bore tube for underground excavation from vertical shafts, comprising a cylindrical tube body made from ductile cast iron and provided with an internal lining, said tube body consisting as a socket tube of an internal socket (2) mounted at one side in the cylindrical body and at the other side of an insertion end (3) having a reduced diameter for insertion into a respective socket (2) of an adjacent socket tube, characterised in that the socket is formed by lacing-out and the insertion end by drawing-in.

2. A bore tube according to claim 1, characterised in that at the socket bottom is provided a circumferential inwardly projecting support collar (5) for supporting the drawn-in insertion end (3) to be inserted of the adjacent socket tube.

3. A bore tube according to claims 1 and 2, characterised in that the transition from the cylindrical body (1) to the drawn-in insertion end (3) extends approximately rectangularly and that the length of the drawn-in insertion end is slightly larger than the socket depth to the support collar (5) at the socket bottom.

4. A bore tube according to claim 1, characterised in that the transition from the cylindrical body (1) to the drawn-in insertion end (3) extends approximately rectangularly and that the length of the drawn-in insertion end is slightly smaller than the socket depth to the socket bottom.

## Revendications

1. Tuyau de fonçage pour creusement souterrain de puits verticaux, comprenant un corps tubulaire en fonte ductile pourvu d'un revêtement intérieur, ledit corps tubulaire consistant comme tuyau à manchon à l'un côté en un manchon (2) mis en place dans le corps cylindrique et à l'autre côté en une extrémité enfichable (3) d'un diamètre réduit à enficher dans un manchon (2) respectif d'un tuyau à manchon voisin,
caractérisé en ce que le manchon est formé par ausforming et l'extrémité enfichable par contractage.

2. Tuyau de fonçage selon la revendication 1, caractérisé en ce qu'au fond du manchon est prévu un collet-support (5) entourant et saillant vers l'intérieur pour le support de l'extrémité enfichable (3) contractée du tuyau à manchon voisin.

3. Tuyau de fonçage selon les revendications 1 et 2, caractérisé en ce que la transition du corps cylindrique (1) à l'éxtrémité enfichable (3) contractée s'étend environ rectangulairement et que la longueur de l'éxtrémité enfichable (3) contractée est légèrement supérieure à la profondeur du manchon jusqu'au collet-support (5) au fond du manchon.

4. Tuyau de fonçage selon les revendications 1 et 2, caractérisé en ce que la transition du corps cylindrique (1) a l'éxtrémité enfichable (3) contractée s'étend environ rectangulairement et que la longueur de l'extrémité enfichable (3) contractée est légèrement inférieure à la profondeur du manchon jusqu'au au fond du manchon.
